# EUROPÄISCHE PATENTSCHRIFT

(11) **EP 2 776 212 B1**
(45) Veröffentlichungstag und Bekanntmachung des Hinweises auf die Patenterteilung: **20.01.2016**
(21) Anmeldenummer: 12775482.8
(22) Anmeldetag: 17.10.2012
(51) Int. Cl.: B25B 21/02, F16D 37/02, F16D 5/00

(54) **HANDWERKZEUGMASCHINE**
HAND TOOL MACHINE
MACHINE OUTIL À MAIN

(30) Priorität: 07.11.2011 DE 102011085820
(43) Veröffentlichungstag der Anmeldung: 17.09.2014
(73) Patentinhaber: HILTI Aktiengesellschaft, 9494 Schaan (LI)
(72) Erfinder: HOOP, Alexander, CH-9494 Schaan (LI); BINDER, Alfred, CH-9470 Buchs (CH); WIERER, Michael, A-6700 Bludenz (AT); PROFUNSER, Dieter, A-6835 Zwischenwasser (AT)
(74) Vertreter: Hilti Aktiengesellschaft Corporate Intellectual Property
(86) Internationale Anmeldenummer: PCT/EP2012/070525
(87) Internationale Veröffentlichungsnummer: WO 2013/068209

(56) Entgegenhaltungen:
- EP-A1- 1 462 219
- EP-A1- 1 677 022
- JP-A- 55 020 917
- US-A1- 2004 020 667

## Beschreibung

### GEBIET DER ERFINDUNG

Die vorliegende Erfindung betrifft eine Handwerkzeugmaschine mit einem Schlagwerk zum Erzeugen von Drehimpulsen, insbesondere eine handgehaltene Werkzeugmaschine mit einem solchen Schlagwerk, nach dem Oberbegriff von Anspruch 1 und wie aus der EP 1 677 022 A1 bekannt.

### OFFENBARUNG DER ERFINDUNG

Eine erfindungsgemäße Handwerkzeugmaschine hat einen Motor, eine Werkzeugaufnahme und ein Schlagwerk, das in einen Antriebsstrang zwischen Motor und Werkzeugaufnahme geschaltet ist. Das Schlagwerk beinhaltet eine erste Welle und eine zweite Welle, von den wahlweise die erste Welle oder die zweite Welle antriebsseitig mit dem Motor verbunden ist. Ein Hohlrad ist mit der ersten Welle verbunden. Eine Innenwand des Hohlrads ist bezüglich einer Achse der zweiten Welle nicht rotationssymmetrisch, d.h. erste Bereiche der Innenwand sind der Achse in radialer Richtung näher als zweite Bereiche der Innenwand. Ein Flügelrad, ist mit der zweiten Welle verbunden und das Flügelrad ist innerhalb des Hohlrads drehbar angeordnet. Das Flügelrad ist in einer ersten Stellung um einen ersten Luftspalt zu dem Hohlrad beabstandet und in einer zweiten Stellung um einen zweiten Luftspalt zu dem Hohlrad beabstandet, wobei der erste Luftspalt kleiner als der zweite Luftspalt ist. Die fehlende Rotationssymmetrie sowohl der Innenwand und des Flügelrads bedingen die unterschiedlichen Stellungen.

Eine Magnetanordnung ist koaxial zu der zweiten Welle angeordnet ist. Ein Magnetfeld der Magnetanordnung durchströmt das Flügelrad und das Hohlrad, welche beide aus einem magnetisch leitfähigen Material gebildet sind. In Abhängigkeit der Stellung des Flügelrads, ist der Magnetfluss erhöht (erste Stellung) oder abgesenkt (zweite Stellung).

Eine magneto-rheologische Flüssigkeit füllt einen Hohlraum zwischen dem Hohlrad und dem Flügelrad aus. Eine magneto-rheologische Flüssigkeit hat eine vom Magnetfeld abhängige Viskosität, welche typischerweise mit zunehmenden Magnetfluss und Magnetfeldstärke zunimmt. Je nach relativer Stellung von Flügelrad und Hohlrad erhöht sich die Viskosität bzw. sinkt die Viskosität. Eine Drehmomentkopplung des Flügelrades an das Hohlrad erhöht sich, wenn diese bei den ersten Stellungen annähern aufgrund der sich zusätzlich erhöhenden Viskosität.

Ein Motor kann beispielsweise die zweite Welle im Wesentlichen ohne Übertragung Drehmoments relativ zu der ersten Welle beschleunigen, wenn die Viskosität gering ist, um dann den aufgenommen Drehimpuls in kurzer Zeit als hohes Drehmoment abzugeben, wenn die Viskosität ansteigt.

Eine Ausgestaltung sieht vor, die Innenwand ein oder mehrere zur Achse vorstehende Polschuhe aufweist. Die Polschuhe sind vorzugsweise in äquidistanten Abständen um die Achse angeordnet, entsprechend einer mehrzähligen Drehsymmetrie. Die Anzahl der Polschuhe kann gleich einer Anzahl von Flügeln des Flügelrads sein. Bei einer ersten Stellung stehen allen Polschuhen jeweils ein Flügel gegenüber.

Eine Ausgestaltung sieht vor, dass ein magnetischer Rückschlusskörper von einer dem Hohlrad abwandten Seite des Magnets bis zu dem Hohlrad reicht. Der Rückschlusskörper umgibt beispielsweise topfförmig den Magnet. Die zweite Welle kann aus einem magnetisch leitfähigen Material gebildet sein. Das Magnetfeld wird von dem Rückschlusskörper und der zweiten Welle bis zu der Trommel und dem Flügelrad geführt. Der Magnet ist vorzugsweise drehsymmetrisch oder rotationssymmetrisch aufgebaut, um eine entsprechende Symmetrie um die Achse aufzuweisen.

Eine Ausgestaltung sieht vor, dass das Hohlrad längs der Achse mit einem Deckel und einem Boden zu einer Kammer abgeschlossen ist, in welcher das Flügelrad und die magneto-rheologische Flüssigkeit angeordnet ist.

Eine Ausgestaltung sieht vor, dass der Magnet an einem Gehäuse der Handwerkzeugmaschine oder auf der zweiten Welle befestigt ist. Die Trommel kann sich gegenüber dem Magnet frei drehen.

Eine Ausgestaltung sieht vor, dass der Magnet einen Elektromagnet und eine einstellbare Stromquelle beinhaltet, und ein Bedienelement zum Einstellen eines von der Stromquelle abgegebenen Stroms vorgesehen ist. Alternativ oder zusätzlich kann Steuerungseinrichtung einen Stromfluss aus der Stromquelle erhöhen, wenn sich das Flügelrad einer der ersten Stellungen nähert, d.h. wenn die Spitzen des Flügelrads sich den Polschuhen des Hohlrads nähern. Die Steuerungseinrichtung kann den Stromfluss nachfolgend nach einer vorgegebenen Zeitspanne reduzieren. Die Stromquelle wird gepulst betrieben, um insbesondere bei einem batteriebetriebenen Gerät Energie einzusparen.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Schlagschrauber,
- Fig. 2, 3 und 4: ein Schlagwerk in verschiedenen Schnittdarstellungen

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

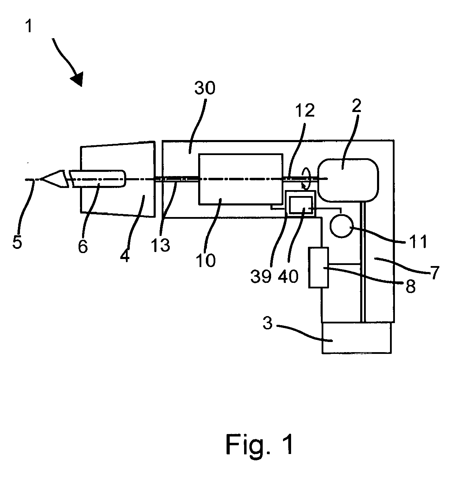

Fig. 1 zeigt als Beispiel einer Handwerkzeugmaschine einen elektrischen Schlagschrauber **1.** Der primäre Antrieb ist ein Elektromotor **2,** der beispielsweise über ein wiederaufladbares Batteriepaket **3** elektrisch gespeist ist. Eine Werkzeugaufnahme **4** wird im Betrieb durch den Elektromotor **2** drehend um eine Arbeitsachse **5** angetrieben. Die Werkzeugaufnahme **4** ist ausgelegt ein Schrauberbit, einen Bohrer oder andere Werkzeuge **6** lösbar aufzunehmen und die Drehbewegung auf dieses Werkzeug zu übertragen. Ein Anwender kann den Schlagschrauber **1** mittels eines Handgriffs **7** führen und mittels eines Systemschalters **8** in Betrieb nehmen. Der Schlagschrauber **1** hat ein Schlagwerk **10,** welches den Elektromotor **2** mit der Werkzeugaufnahme **4** koppelt. Das Schlagwerk **10** erzeugt aus dem gleichförmig abgegebenen Drehmoment des Elektromotors **2** ein pulsendes Drehmoment, welches an die Werkzeugaufnahme **4** weitergeleitet wird. Eine Amplitude der Drehmomentpulse ist mit einem Wahlschalter **11** einstellbar.

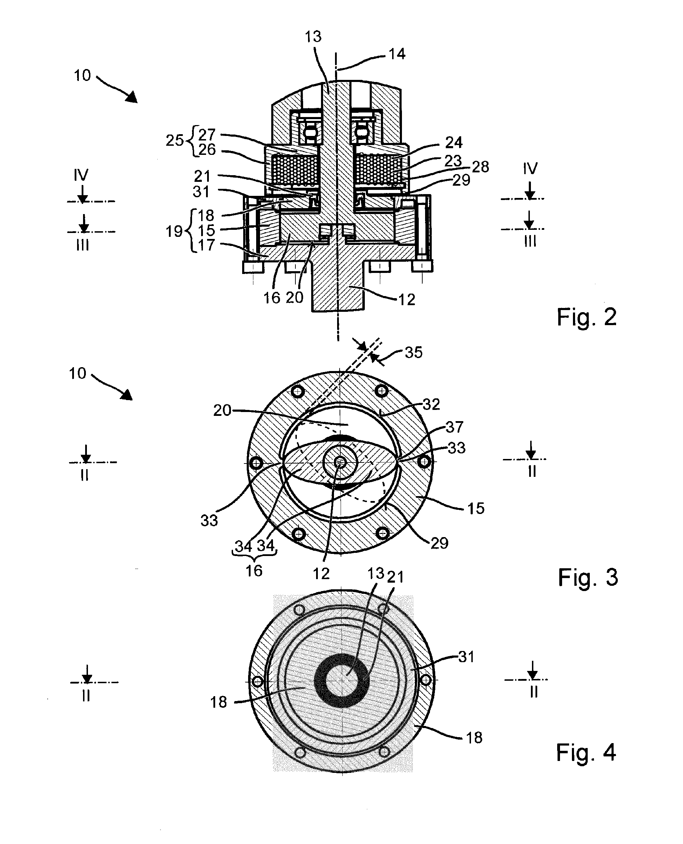

Fig. 2 zeigt das Schlagwerk **10** in einem Längsschnitt in der Ebene II-II; Fig. 3 das Schlagwerk **10** in einem Querschnitt in der Ebene III-III, Fig. 4 das Schlagwerk **10** in einem Querschnitt in der Ebene IV-IV. Das Schlagwerk **10** hat eine Antriebswelle **12** und eine Abtriebswelle **13,** welche beispielsweise koaxial zueinander und um die Achse **14** drehbar gelagert sind. Die Antriebswelle **12** ist drehfest mit einem Hohlrad **15** verbunden und kann dieses um die Achse **14** antreiben. Ein Flügelrad **16** ist innerhalb des Hohlrads **15** mit Spiel angeordnet, d.h. das Flügelrad **16** und das Hohlrad **15** können sich relativ zueinander drehen. Das Flügelrad **16** ist drehfest an die Abtriebswelle **13** angebunden.

Das Hohlrad **15** bildet zusammen mit einem Boden **17** und einem Deckel **18** eine Trommel **19,** die die Kammer **20** abschließt. Der Deckel **18** und der Boden **17** können mit dem Hohlrad **15** drehfest verbunden oder mit einer Schwimmdichtung an dem Hohlrad **15** abgedichtet sein. Das Flügelrad **16** ist innerhalb einer Kammer **20** angeordnet, die Abtriebswelle **13** ist mittels eines abdichtenden Lagers **21** durch den Deckel **18** geführt.

Ein Drehmomentübertragung des Hohlrads **15** an das Flügelrad **16** bzw. umgekehrt, erfolgt mittelbar über eine magneto-rheologische Flüssigkeit **22,** welche die Kammer **20** innerhalb des Hohlrads **15** ausfüllt. Eine Viskosität der magneto-rheologischen Flüssigkeit **22** wird durch ein relative Stellung von Hohlrad **15** und Flügelrad **16** geschaltet.

Ein Magnet **23** ist außerhalb der Trommel **19** um die Abtriebswelle **13** angeordnet vorgesehen. Der Magnet **23** ist beispielsweise ein Elektromagnet mit Magnetspulen **24,** die um die Abtriebswelle **13** gewickelt sind. Die Magnetspulen **24** können gegenüber der Abtriebswelle **13** drehbar gelagert sein. Ferner sind die Magnetspulen **24** dem Deckel **18** der Trommel **19** gegenüberliegend angeordnet. Das erzeugte Magnetfeld ist konzentrisch, vorzugsweise rotationssymmetrisch oder wenigstens drehsymmetrisch zu der Drehachse **14.**

Ein Rückschlusskörper **25** aus einem magnetischen leitfähigen Material, z.B. ferromagnetischem Stahl, umschließt die Magnetanordnung **23** in einer topfförmigen Weise, d.h. umschließt mit einem zylindrischen Mantel **26** radiale Außenflächen der Magnet **23** und mit einem Boden **27** eine von der Trommel **19** abgewandte Seite **28.** Der zylindrische Mantel **26** ist über einen geringen Luftspalt **29** zu dem Hohlrad **15** beabstandet. Der zylindrische Mantel **26** und das Hohlrad **15** überlappen in einer Projektion auf eine Ebene senkrecht zur Achse **14,** wodurch ein Magnetfluss zwischen ihnen hauptsächlich parallel zu der Achse **14** geführt ist.

Der Magnet **23** und/oder der Rückschlusskörper **25** sind vorzugsweise an dem Gehäuse **30** der Handwerkzeugmaschine **1** befestigt.

Die Abtriebswelle **13** ist vorzugsweise aus einem magnetisch leitfähigen Material, z.B. ferromagnetischem Stahl, gleichermaßen sind das Flügelrad **16** und das Hohlrad **15** aus magnetisch leitfähigen Material. Ein Magnetfluss fließt axial entlang der Abtriebswelle **13,** durch das Flügelrad **16** in radialer Richtung zu dem Hohlrad **15** und über einen Rückschlusskörper parallel zur Achse **14** zurück. Der Boden **17** und der Deckel **18** sind aus einem magnetisch nicht-leitenden Material, z.B. Aluminium, Chromstahl. Ein ringförmiger Einsatz **31** aus einem magnetisch leitfähigen Material in dem Deckel **18** ist in axialer Verlängerung des Rückschlusskörpers **25** angeordnet.

Das Hohlrad **15** hat eine nicht-rotationssymmetrische Innenwand **32.** Die beispielhafte Innenwand **32** ist weitgehend zylindrisch und hat zwei diametral gegenüberliegende radial nach Innen vorstehende Polschuhe **33.** Ein Abstand der Polschuhe **33** ist bis auf ein geringes Spiel gleich dem Durchmesser des Flügelrads **16.** Das Flügelrad **16** ist ebenfalls nicht rotationssymmetrisch und hat zwei diametral angeordnete Flügel **34.** In einer ersten Stellung ist das Flügelrad **16** nur durch einen kleinen Luftspalt von den Polschuhen **33** an der Innenwand **32** entfernt. In einer zweiten zur ersten Stellung gedrehten Stellung (gestrichelt dargestellt) ist ein Luftspalt **35** zwischen Flügelrad **16** und Innenwand **32** größer. Ein Magnetfluss von den Spitzen **37** der Flügel **34** zu dem Hohlrad **15** ist bei der ersten Stellung aufgrund des geringeren Luftspalts größer als in der zweiten Stellung. Das Flügelrad **16** wirkt als Drehschalter für das Magnetfeld.

Die Kammer **20,** d.h. der Raum zwischen dem Flügelrad **16** und dem Hohlrad **15,** ist mit einer magneto-rheologischen Flüssigkeit ausgefüllt. Eine Viskosität der magneto-rheologischen Flüssigkeit steigt in der Umgebung eines hohen Magnetflusses. Der große Magnetfluss bei der ersten Stellung bewirkt somit eine hohe Viskosität um die Polschuhe **33** und die Spitzen **37** des Flügelrads **16,** während die Viskosität an den Polschuhen **33** und den Spitzen **37** bei der zweiten Stellung abfällt.

Alternative Ausführungsformen können eine größere Anzahl von Magneten aufweisen, die vorzugsweise in äquidistanten Winkelschritten um die Drehachse **14** angeordnet sind, was eine entsprechend höhere Anzahl an Polen und eine mehrzähligen Symmetrie ausbildet. Die Polschuhe **33** sind vorzugsweise in radialer Richtung nahe dem Mantel **15** angeordnet.

Eine Abmessung des zähen Bereichs **38** ist in der Größenordnung der Abmessung des Polschuhs **33.** Eine Winkelabmessung der Polschuhe **33** liegt unter 20 Grad. Die Polschuhe **33** haben einen Anteil von weniger als 10 % des Umfangs der Innenwand **32.** Die Flügel **34** haben in Umfangsrichtung eine begrenzte Abmessung. Die Winkelabmessung liegt der Spitzen **37** liegt vorzugsweise unter 30 Grad. Somit kann das Flügelrad **16** Stellungen einnehmen, in welchen das Flügelrad **16** einen magnetischen Schluss mit den Polschuhen **33** bewirkt (erste Stellungen) und ohne magnetischen Schluss sein (zweite Stellungen) sein. Das beispielhafte Flügelrad **16** hat genau zwei Flügel **34,** gleich der Anzahl von zwei Polschuhen **33.** Bei alternativen Ausführungsformen hat das Flügelrad **16** drei oder mehr Flügel, welche vorzugsweise mit einer ihrer Zahl entsprechenden Drehsymmetrie angeordnet sind. Die Innenwand **32** ist mit der gleichen Zahl von Polschuhen **33** versehen, welche äquidistant angeordnet sind, wodurch die gleiche Drehsymmetrie erhalten wird.

Die Viskosität der magneto-rheologischen Flüssigkeit kann zusätzlich durch die Magnetfeldstärke der Magnets **23** gesteuert werden. Insbesondere ist eine Stromquelle **39** vorgesehen, die die Spulen **24** speist. Ein eingespeister Strom kann durch eine Steuerungseinrichtung **40** geschalten und/oder in der Amplitude eingestellt werden, um das Magnetfeld abzuschalten oder die Magnetfeldstärke abzusenken. Mittels der Steuerungseinrichtung **40** kann das maximal übertragbare Drehmoment mittelbar durch die Magnetfeldstärke eingestellt werden. Ein Anwender kann Einstellungen der Steuerungseinrichtung **40** mittels des Wahlschalters **11** vorgeben. Ferner kann die Steuerungseinrichtung **40** ermitteln, ob die Flügel **34** den Polschuhen **33** gegenüberliegen und kann darauf ansprechend die Magnetfeldstärke erhöhen und nach eine vorgegebenen Zeitspanne absenken. Das Magnetfeld kann beispielsweise erhöht werden, wenn das Flügelrad höchstens 10 Grad vor der ersten Stellung ist, der koinzidenten Stellung von Flügel **34** und Polschuh **33.** Hierbei ist zu berücksichtigen, dass die magneto-rheologischen Flüssigkeit seine Viskosität mit einer Verzögerung nach Anliegen des Magnetfeldes aufbaut. Das Flügelrad **16** wird zunächst maximal blockiert und dann aktiv freigegeben. Das Erkennen des Gegenüberliegens oder Annäherns kann beispielsweise mittels eines Positionssensors zum Erfassen einer relativen Lage von Flügelrad **16** und Trommel **19** oder eines Beschleunigungssensors zum Erfassen einer Verzögerung des Flügelrads **16** erfolgen.

Die magnetisch leitfähigen Materialien haben vorzugsweise eine Permeabilitätszahl von größer 100, die magnetisch nicht-leitfähigen Materialien haben vorzugsweise eine Permeabilitätszahl ähnlich wie Luft im Bereich von 1.

## Patentansprüche

1. Handwerkzeugmaschine (**1**) mit einem Motor **(2),** einer Werkzeugaufnahme **(4)** und einem Schlagwerk (**10**), das in einen Antriebsstrang zwischen Motor **(2)** und Werkzeugaufnahme **(4)** geschaltet ist, wobei das Schlagwerk **(10)** beinhaltet:
eine erste Welle **(12),** eine zweite Welle **(13),**
ein mit der ersten Welle **(12)** verbundenes Hohlrad (**15**), dessen Innenwand **(32)** bezüglich einer Achse (**14**) der zweiten Welle (**13**) nicht rotationssymmetrisch ist,
ein mit einer zweiten Welle **(13)** verbundenes Flügelrad **(16),** welches innerhalb des Hohlrads (**15**) drehbar angeordnet ist,
ein Magnet **(23),** welcher koaxial zu der zweiten Welle **(13)** angeordnet ist und eine Flüssigkeit, die einen Hohlraum zwischen dem Hohlrad (**15**) und dem Flügelrad **(16)** ausfüllt,
wobei das Flügelrad **(16)** in einer ersten Stellung um einen ersten Luftspalt zu dem Hohlrad **(15)** beabstandet ist und in einer zweiten Stellung um einen zweiten Luftspalt zu dem Hohlrad (**15**) beabstandet ist, wobei der erste Luftspalt kleiner als der zweite Luftspalt ist, und
wobei das Flügelrad **(16)** und das Hohlrad **(15)** aus einem magnetisch leitfähigen Material gebildet sind, **dadurch gekennzeichnet, dass**
die Flüssigkeit magneto-rheologisch ist.

2. Handwerkzeugmaschine nach Anspruch 1, **dadurch gekennzeichnet, dass** die Innenwand **(32)** ein oder mehrere zur Achse **(14)** vorstehende Polschuhe **(33)** aufweist.

3. Handwerkzeugmaschine nach Anspruch 2, **dadurch gekennzeichnet, dass** die Anzahl der Polschuhe **(33)** gleich einer Anzahl von Flügeln **(34)** des Flügelrads **(16)** ist.

4. Handwerkzeugmaschine nach einem der vorhergehenden Ansprüche, **dadurch gekennzeichnet, dass** ein magnetischer Rückschlusskörper (**25**) von einer dem Hohlrad **(15)** abwandten Seite des Magnets **(23)** bis zu dem Hohlrad (**15**) reicht.

5. Handwerkzeugmaschine nach einem der vorhergehenden Ansprüche, **dadurch gekennzeichnet, dass** die zweite Welle **(13)** aus einem magnetisch leitfähigen Material gebildet ist.

6. Handwerkzeugmaschine nach einem der vorhergehenden Ansprüche, **dadurch gekennzeichnet, dass** das Hohlrad **(15)** längs der Achse **(14)** mit einem Deckel **(18)** und einem Boden **(17)** zu einer Kammer **(20)** abgeschlossen ist, in welcher das Flügelrad **(16)** und die magneto-rheologische Flüssigkeit angeordnet ist.

7. Handwerkzeugmaschine nach einem der vorhergehenden Ansprüche, **dadurch gekennzeichnet, dass** der Magnet **(23)** an einem Gehäuse **(30)** der Handwerkzeugmaschine **(1)** oder auf der zweiten Welle **(13)** befestigt ist.

8. Handwerkzeugmaschine nach einem der vorhergehenden Ansprüche, **dadurch gekennzeichnet, dass** der Magnet **(23)** einen Elektromagnet und eine einstellbare Stromquelle **(39)** beinhaltet, und ein Bedienelement **(11)** zum Einstellen eines von der Stromquelle **(39)** abgegebenen Stroms vorgesehen ist.

9. Handwerkzeugmaschine nach einem der vorhergehenden Ansprüche 1 bis 7, **dadurch gekennzeichnet, dass** der der Magnet **(23)** einen Elektromagnet und eine einstellbare Stromquelle **(39)** beinhaltet, und eine Steuerungseinrichtung **(40)** einen Stromfluss aus der Stromquelle **(39)** erhöht, wenn sich das Flügelrad **(16)** einer der ersten Stellungen nähert.

10. Handwerkzeugmaschine nach Anspruch 9, **dadurch gekennzeichnet, dass** die Steuerungseinrichtung **(40)** den Stromfluss nach einer vorgegebenen Zeitspanne ab der Annäherung des Flügelrads **(16)** an die erste Stellung reduziert.

## Claims

1. Hand-held power tool (1) comprising a motor (2), a tool holder (4) and a striking mechanism (10) incorporated into a drive train between the motor (2) and the tool holder (4), the striking mechanism (10) including:
a first shaft (12), a second shaft (13),
a ring gear (15) connected to the first shaft (12) and the inner wall (32) of which is not rotationally symmetrical relative to an axis (14) of the second shaft (13),
an impeller (16) connected to a second shaft (13) and arranged to rotate within the ring gear (15),
a magnet (23) arranged coaxially with the second shaft (13) and
a fluid that fills a hollow space between the ring gear (15) and the impeller (16),
wherein the impeller (16) is spaced from the ring gear (15) by a first air gap in a first position and is spaced from the ring gear (15) by a second air gap in a second position, the first air gap being smaller than the second air gap, and
wherein the impeller (16) and the ring gear (15) are formed of a magnetically conductive material, **characterised in that**
the fluid is magnetorheological.

2. Hand-held power tool according to claim 1, **characterised in that** the inner wall (32) has one or more pole shoes (33) projecting relative to the axis (14).

3. Hand-held power tool according to claim 2, **characterised in that** the number of pole shoes (33) is equal to the number of vanes (34) on the impeller (16).

4. Hand-held power tool according to one of the preceding claims, **characterised in that** a magnetic yoke member (25) extends from a side of the magnet (23) remote from the ring gear (15) to the ring gear (15).

5. Hand-held power tool according to one of the preceding claims, **characterised in that** the second shaft (13) is formed of a magnetically conductive material.

6. Hand-held power tool according to one of the preceding claims, **characterised in that** the ring gear (15) is closed along the axis (14) by a cover (18) and a base (17) relative to a chamber (20) in which the impeller (16) and the magnetorheological fluid are arranged.

7. Hand-held power tool according to one of the preceding claims, **characterised in that** the magnet (23) is fixed to a housing (30) of the hand-held power tool (1) or to the second shaft (13).

8. Hand-held power tool according to one of the preceding claims, **characterised in that** the magnet (23) includes an electromagnet and an adjustable current source (39) and an operating element (11) is provided for adjusting a current supplied by the current source (39).

9. Hand-held power tool according to one of the preceding claims 1 to 7, **characterised in that** the magnet (23) includes an electromagnet and an adjustable current source (39) and a controller (40) increases a current flow from the current source (39) when the impeller (16) approaches one of the first positions.

10. Hand-held power tool according to claim 9, **characterised in that** the controller (40) reduces the current flow at a predetermined time after the impeller (16) approaches the first position.

## Revendications

1. Machine-outil manuelle (1) comportant
un moteur (2), un mandrin (4) et un mécanisme de percussion (10) raccordé dans une transmission entre le moteur (2) et le mandrin (4), dans lequel le mécanisme de percussion (10) contient :
un premier arbre (12), un second arbre (13),
une roue creuse (15) reliée au premier arbre (12) dont la paroi intérieure (32) n'est pas symétrique en rotation par rapport à un axe (14) du second arbre (13),
une roue à ailettes (16) reliée au second arbre (13), qui est agencée de manière rotative à l'intérieur de la roue creuse (15),
un aimant (23) qui est agencé coaxialement au second arbre (13) et
un liquide qui remplit une cavité entre la roue creuse (15) et la roue à ailettes (16),
dans laquelle la roue à ailettes (16) est, dans une première position, espacée de la roue creuse (16) par un premier entrefer et, dans une seconde position, espacée de la roue creuse (15) par un second entrefer, dans laquelle le premier entrefer est plus petit que le second entrefer, et
dans laquelle la roue à ailettes (16) et la roue creuse (15) sont formées à partir d'un matériau magnétiquement conducteur, **caractérisée en ce que** le liquide est magnéto-rhéologique.

2. Machine-outil manuelle selon la revendication 1, **caractérisée en ce que** la paroi intérieure (32) comporte un ou plusieurs épanouissements polaires (33) faisant saillie par rapport à l'axe (14).

3. Machine-outil manuelle selon la revendication 2, **caractérisée en ce que** le nombre d'épanouissements polaires (33) est égal à un nombre d'ailettes (34) de la roue à ailettes (16).

4. Machine-outil manuelle selon l'une des revendications précédentes, **caractérisée en ce qu'**un corps magnétique arrière (27) s'étend à partir d'un côté opposé à la roue creuse (15) de l'aimant (23) jusqu'à la roue creuse (15).

5. Machine-outil manuelle selon l'une des revendications précédentes, **caractérisée en ce que** le second arbre (13) est formé à partir d'un matériau magnétiquement conducteur.

6. Machine-outil manuelle selon l'une des revendications précédentes, **caractérisée en ce que** la roue creuse (15) est obturée le long de l'axe (14) par un couvercle (18) et un fond (17) vers une chambre (20) dans laquelle se trouvent la roue à ailettes (16) et le liquide magnéto-rhéologique.

7. Machine-outil manuelle selon l'une des revendications précédentes, **caractérisée en ce que** l'aimant (23) est fixé sur un boîtier (30) de la machine-outil manuelle (1) ou sur le second arbre (13).

8. Machine-outil manuelle selon l'une des revendications précédentes, **caractérisée en ce que** l'aimant (23) est un électro-aimant et contient une source de courant réglable (39), et un élément de commande (11) est prévu pour régler un courant délivré par la source de courant (39).

9. Machine-outil manuelle selon l'une des revendications 1 à 7 précédentes, **caractérisée en ce que** l'aimant (23) contient un électro-aimant et une source de courant réglable (39), et un dispositif de commande (40) augmente un flux de courant provenant de la source de courant (39), lorsque la roue à ailettes (16) s'approche de l'une des premières positions.

10. Machine-outil manuelle selon la revendication 9, **caractérisée en ce que** le dispositif de commande (40) réduit le flux de courant après une période de temps prédéfinie après que la roue à ailettes (16) s'est approchée de la première position.
